# EUROPÄISCHE PATENTSCHRIFT

(11) **EP 0 472 744 B1**
(45) Veröffentlichungstag und Bekanntmachung des Hinweises auf die Patenterteilung: **06.03.1996**
(21) Anmeldenummer: 90109504.2
(22) Anmeldetag: 18.05.1990
(51) Int. Cl.: B01J 2/16, A23F 5/12, A23P 1/02

(54) **Verfahren und Vorrichtung zum Behandeln eines löslichen, pulverförmigen Materials**
Process and apparatus for treating soluble powdered material
Procédé et dispositif pour traiter une matière soluble et pulvérulente

(43) Veröffentlichungstag der Anmeldung: 04.03.1992
(73) Patentinhaber: SOCIETE DES PRODUITS NESTLE S.A., CH-1800 Vevey (CH)
(72) Erfinder: Maier, Hanspeter, D-6082 Mörfelden (DE); Zimmermann, Klaus, D-7014 Kornwestheim (DE)

(56) Entgegenhaltungen:
- FR-A- 2 202 724
- US-A- 3 085 492
- US-A- 3 622 081

## Beschreibung

Die Erfindung betrifft ein Verfahren zum Behandeln eines löslichen, pulverförmigen Materials. Die Erfindung betrifft weiter eine Vorrichtung zur Durchführung dieses Verfahrens.

Pulverförmige Produkte, wie löslicher oder Instant-Kaffee, werden gewöhnlich agglomeriert, um die Benetzbarkeit und die Löslichkeit der Teilchen zu verbessern und den mitteren Partikeldurchmesser zu vergrössern. Das zu agglomerierende Material wird der Einwirkung eines kräftigen Strahles aus Wasserdampf von hoher Geschwindigkeit ausgesetzt. Gewöhnlich müssen die Oberflächen der Teilchen von dem Wasserdampf gründlich benetzt werden, um eine zufriedenstellende Agglomerierung oder Oberflächenstruktur zu erzielen. Das EP-Patent 207 384 betrifft schon ein Verfahren und eine Vorrichtung zur Agglomerierung und Verbesserung der Oberflächenstruktur von pulverförmigem Material. Bei dieser Vorrichtung ist aber die Benetzungszone nicht genügend lang, um eine gute Agglomerierung oder Nachdunklung zu erzielen, und zusätzlich kann die Vorrichtung nach relativ kurzer Betriebszeit verkleben.

Das FR-Patent 2202724 betrifft ein Verfahren und eine Vorrichtung zur Behandlung eines löslichen, pulverförmigen Materials. Diese Vorrichtung weist zwei enge Schlitze auf die mit hohen Geschwindigkeiten arbeiten, so dass die Reichweite zur Benetzung zu kurz ist.

Der Erfindung liegt die Aufgabe zugrunde, ein verbessertes Verfahren zum Behandeln eines löslichen, pulverförmigen Materials zu schaffen, in dem die Benetzung der Partikel in einer langen Zone geschieht, das Risiko der Verklebung minimalisiert wird und das erhaltene Agglomerat verbesserte Instant-Eigenschaften und Oberflächeneigenschaften besitzt.

Beim Verfahren gemäss der vorliegenden Erfindung wird das zentral fliessende, pulverförmige Material durch zwei zu diesem Strom koaxiale Gasströmungen in einer stromabwärts verlaufenden Richtung befeuchtet, wobei zumindest die äussere Gasströmung Wasserdampf ist , die innere Gasströmung schneller als die äussere und die äussere Gasströmung eine Geschwindigkeit von 10 m/s und weniger beträgt, so dass eine Benutzung des Materials in einer langen Zone erfolgt. Die innere Gasströmung ist eine Luft- oder Wasserdampfströmung. Diese Gasströmung dient dazu, Pulververklebungen zu vermeiden. Die Geschwindigkeitsdifferenz ist von Durchsatz und Art des Produktes abhängig: Je mehr Produktdurchsatz, desto höher das Geschwindigkeitsverhältnis der inneren zur äusseren Gasströmung. Dieses Verhältnis liegt zwischen 1:1 und 8:1. Die äussere Gasströmung dient dazu, dass der Strom von Pulver so lange wie möglich gleichförmig bleibt. Die beiden Strömungen bewirken eine Benetzung der Partikel und erlauben, die Benetzungszone erheblich zu verlängern, wobei die Agglomeration verbessert wird. Die äussere Strömung bewirkt zusätzlich, dass möglichst wenig sekundäre Luft in den Strahl eingesaugt wird.

Die beiden Wasserdampfströmungen sind kreisförmig und ihre Geschwindigkeit ist über den ganzen Umfang des Stromes gleich, damit eine regelmässige Benetzung erreicht wird.

Erfindungsgemäss ist die innere Wasserdampfströmung dünner als die äussere. Sie ist zusätzlich gerade gerichtet oder mit Drall behaftet.

Der eingeführte Wasserdampf ist überhitzter oder gesättigter Wasserdampf, wobei die Temperatur bei 100 bis 130°C und der Druck bei 1 bis 1,5 bar liegen. Man arbeitet zumeist bei ca. 100°C und mit einem Druck von ca. 1 bar. Es kann auch nasser Wasserdampf, welcher ein Nebel von feinen Wassertröpfchen in gesättigten Wasserdamp ist, verwendet werden. Es können auch andere wässerige Gase verwendet werden, welche Nebelbildungen von mikroskopischen Wassertröpfchen umfassen, die in anderen Gasen als Wasserdampf dispergiert sind.

Das Verfahren eignet sich für alle pulverförmige Materialen, deren Eigenschaften in Bezug auf Rieselfähigkeit, Benetzbarkeit, Löslichkeit, Härte und Farbe verbessert werden sollen, z.B. pulverförmige Lebensmittel. Unter den pulverförmigen Lebensmitteln, die agglomeriert oder nachgedunkelt werden können, sind löslicher Kaffee, löslicher Tee, lösliches Zichorienpulver, lösliches Getreideextraktpulver, Milchpulver, Laktose und Mischgetränke auf Kohlenhydratbasis zu nennen. Es können auch Kombinationen derartiger Materialien agglomeriert oder nachgedunkelt werden.

Wenn man erfindungsgemäss arbeitet, ist der Anteil von nicht agglomeriertem Pulvermaterial geringer als bei herkömmlichen Düsen.

Die Erfindung betrifft weiter die Vorrichtung zur Durchführung des Verfahrens mit einem Füllrohr zur Speisung des teilchenförmigen Materials, in der sie koaxial zum Füllrohr zwei Befeuchtungseinrichtungen aufweist, wobei die innere durch einen kreisförmigen Schlitz und die äussere durch eine ringförmige Sintermetallplatte gebildet ist und die Mündung des Füllrohres für das Material und diejenigen des Schlitzes für die Gasströmung und diejenige der Sintermetallplatte für die Zufuhr des Wasserdampfes praktisch in der gleichen Ebene liegen.

Die Vorrichtung kann eine oder zwei Kammern für die Zufuhr und Kontrolle der Gasströmung besitzen. Mit einer Zwei-Kammer-Anordnung kann man separat Druck und Geschwindigkeit des Gases einstellen.

Im Fall einer Ein-Kammer-Anordnung kann man die Geschwindigkeit der Zufuhr des Wasserdampfes mit der Geometrie der Schlitzöffnung und der Porosität der Sintermetallplatte variieren.

Die Platte trägt eine sehr grosse Anzahl mikroskopischer Poren, wobei diese Poren über die ganze Oberfläche der Platte gleichmässig verteilt sind. Je nach Art der Sintermetallplatte haben die Poren einen mittleren Durchmesser von 10 bis 200 µm. Mit dieser Platte erzielt man eine Wasserdampfgeschwindigkeit, die niedriger ist als diejenige des Schlitzes. Man arbeitet zum Beispiel im Schlitz und in der Sintermetallplatte mit Geschwindigkeiten zwischen 20 und 30 m/s respektiv von 10 m/s und weniger. Die Oeffnung des Schlitzes ist schmaler als die Breite der Sintermetallplatte. Wie schon oben erwähnt, ist es auch möglich, eine zusätzliche Befeuchtungseinrichtung anzubringen, um die Benetzung des Produktstromes zu verbessern. Diese ist in der Mitte des Materialstromes angebracht und besitzt ebenfalls eine Oeffnung, deren Mündung in der gleichen obenerwähnten Ebene liegt. Bei dieser zusätzlichen Düse arbeitet man mit einer Geschwindigkeit von 20 bis 100 m/s.

Um die Turbulenz des Gasstromes zu minimalisieren, ist es notwendig, über den Schlitz einen Ring mit Bohrungen und Leitflächen anzubringen. Diese Bohrungen und Leitflächen können gerade oder schräg sein.

Es wird angenommen, dass unter den in der Befeuchtungszone herrschenden Bedingungen die Teilchen miteinander bei niedrigen Relativgeschwindigkeiten über eine längere Strecke in Berührung kommen, wodurch die Wahrscheinlichkeit der Agglomeratbildung erhöht wird.

Die erfindungsgemässe Agglomerationsdüse kann für mehrere Einsatzgebiete vorgesehen werden: - nur für die Agglomeration, zum Beispiel für Kaffeersatz- und Kakaobasis-Getränke, - oder auch für einen kombinierten Einsatz von Sprühtrocknung und Agglomerierung zum Beispiel für Kaffeextrakte, - oder auch zur Nachdunklung bzw. Oberflächenstrukturierung bereits in endgültiger Grösse vorliegender Partikel.

Nachstehend werden die bevorzugten Ausführungsformen der erfindungsgemässen Vorrichtung näher erläutert. In der beiliegenden Zeichnung zeigen:
- Fig. 1:: ein schematisches Diagramm einer Vorrichtung im Einsatz der Agglomerierung,
- Fig. 2:: ein schematisches Diagramm einer Vorrichtung im Einsatz von Sprühtrocknung und Agglomerierung,
- Fig. 3 :: eine schematische Teilansicht, im Querschnitt, der in Fig. 1 veranschaulichten Vorrichtung,
- Fig. 4:: eine schematische Teilansicht, im Querschnitt einer zweiten Ausführungsform der Vorrichtung,
- Fig. 5:: einen Querschnitt längs Linie V-V von Fig. 3,

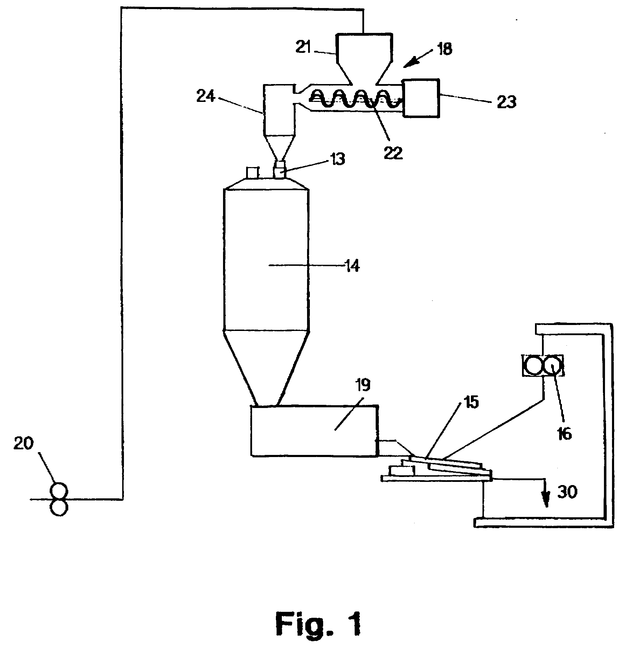

### - Agglomeration eines kakaohaltigen Getränkepulvers, Fig. 1.

Das Gemisch der Komponenten wird zur Mahlgutzuführung (18) mittels eines Fördersystems (20) transportiert. Die Mahlgutzuführung (18) besteht aus Pufferbehälter (21), Dosierschnecke (22), Antrieb (23) und Einlauftrichter (24). Von hier wird die Düse (13) mit Pulver vollkommen gleichmässig gespeist. Im Trockenturm (14) werden die entstehenden Flüssigkeitsbrücken zwischen den Partikeln soweit durch Auskristallisation gefestigt, dass sie auf dem Fliessbett des Nachtrockners (19) nicht mehr zerfallen. Die Siebmaschine (15) trennt Ueberkorn ab, das über eine Mühle (16) zurückgeführt wird und das Fertigprodukt (30) geht zur Abfüllung.

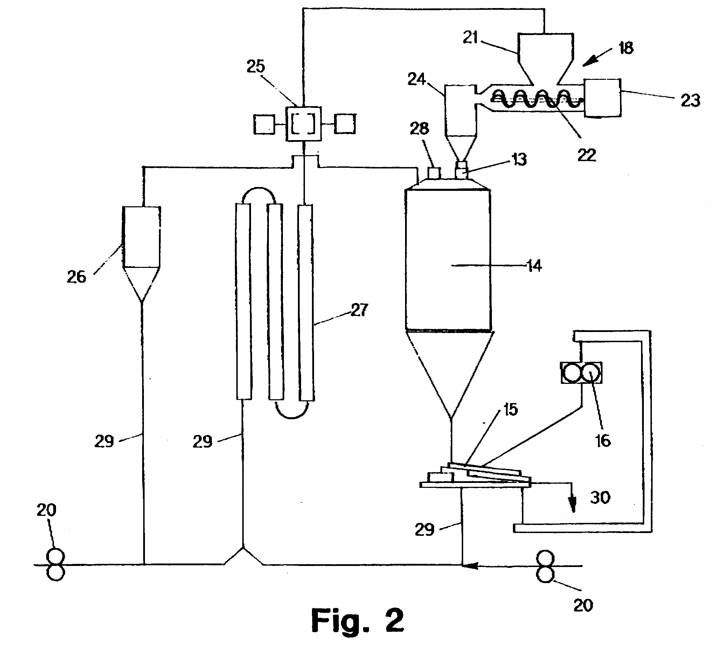

### - Sprühtrocknung und Agglomeration eines Instantkaffees, Fig. 2.

Der parallel zum Heissluftstrom eingesprühte Extrakt (28) trocknet im Trockenturm (14), bevor er das Sieb (15) erreicht. Aus Sieb (15) und Abluftstaubabscheider (26) wird das Feingut (29) über das Fördersystem (20) gesammelt, durch den Wärmeaustauscher (27) gekühlt und in der Mühle (25) zerkleinert. Ueber die Mahlgutzuführung (18) gelangt das Produkt auf die Düse (13). Die Mahlgutzuführung (18) besteht aus Pufferbehälter (21), Dosierschnecke (22), Antrieb (23) und Einlauftrichter (24). Nach Passieren der Düse (13) gelangt das mit Dampf befeuchtete Mahlgut in den integrierten Trockenturm (14), wo es gleichzeitig mit dem eingesprühten Extrakt (28) trocknet. Die Siebmaschine (15) trennt Ueberkorn ab, das über eine Mühle (16) zurückgeführt wird und das Fertigprodukt (30) geht zur Abfüllung.

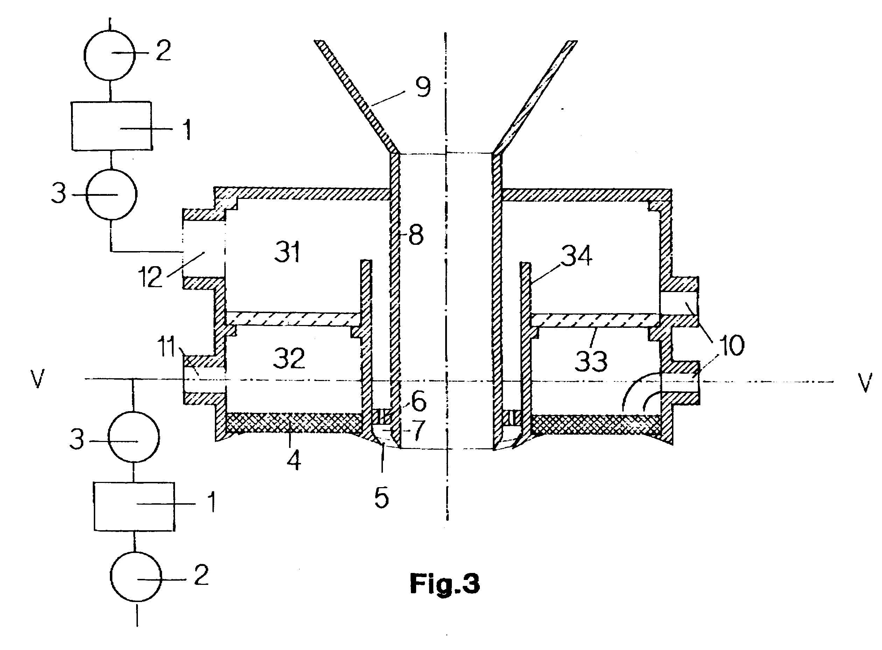

### - Aufbau der Düse, Fig. 3.

Ueber den Trichter (9) gelangt das Produkt in das Pulverrohr (8). Nach einer Massenstrommessung (2) strömt der Dampf durch eine Sättigungs- und Ueberhitzungseinrichtung (1). Druck und Temperatur werden in (3) gemessen. Im Einlass (12) wird der Spaltdampfraum (31) beschickt. Der Dampf tritt von dort durch einen Ring mit Bohrungen (6) aus dem Spalt (5) aus. Leitbleche (7) bestimmen die Richtung des Dampfes. Sinngemäss wird der Dampf für die Sintermetallplatte (4) konditioniert. Er gelangt über Einlass (11) in den Sintermetalldampfraum (32), der von dem Spaltdampfraum (31) durch die Zwischenplatte (33) und das Spaltrohr (34) getrennt ist. Dieser Dampf tritt aus der Sintermetallplatte (4) mit niedriger Geschwindigkeit und feinst vernebelten Tröpfchen aus. In den beiden Kammern (31, 32) anfallendes Kondensat wird durch die Kondensatauslässe (10) aus den Kammern entfernt.

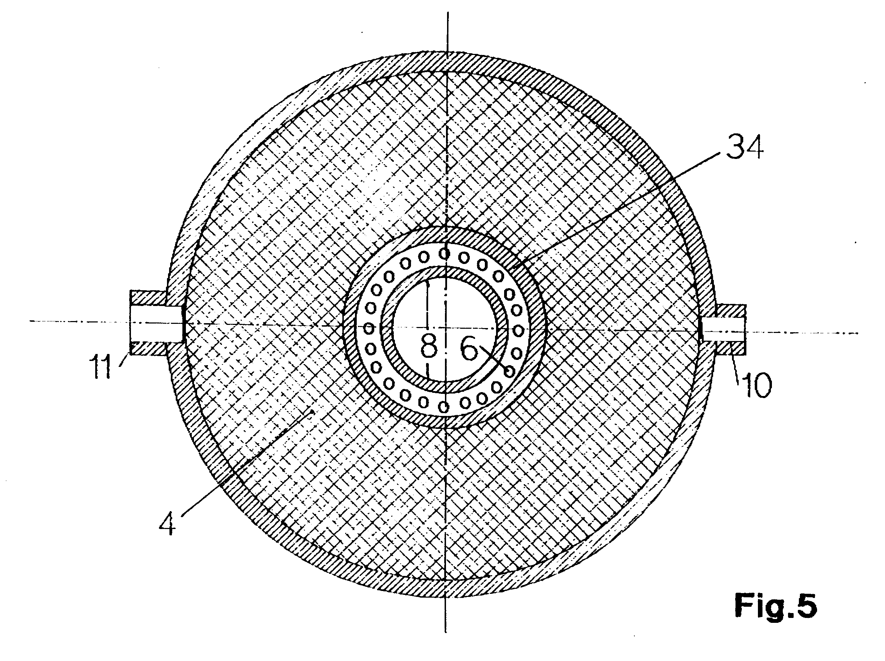

Fig. 5 zeigt einen Schnitt längs Linie V-V der Fig. 3 über der Sintermetallplatte.

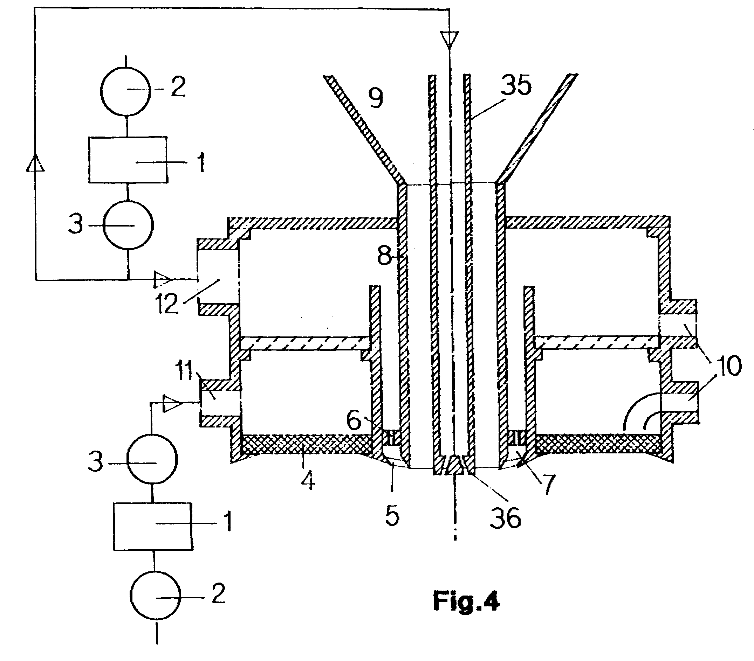

Fig. 4 entspricht der Beschreibung zu Fig. 3. Es ist lediglich die zusätzliche Möglichkeit der Applikation eines zentralen Dampfstrahls gezeigt. Er wird über ein Rohr (35) zugeführt. Die Austrittsgeschwindigkeit ist über die Zentraldüsenöffnung (36) einstellbar.

### - Verfahrensbeispiel.

Bei einer Aufgabe von 1 Tonne Pulver pro Stunde beträgt die Dampfmenge des inneren Strahls 25 kg/h. bei 1,3 bar. Die Austrittsgeschwindigkeit liegt bei ca. 100 m/s, die Temperatur bei 110°C. Die Dampfmenge des Spaltrings (5) beträgt 60 kg/h. bei 1,1 bar, 105°C und 30 m/s. Der koaxiale äussere Dampfstrom (Sintermetallplatte) liegt bei 100 kg/h., 1,15 bar, 102°C und 7 m/s. Der austretende Pulverstrahl bleibt mindestens auf 1 m ungestört von einströmenden Sekundärluftwirbeln.

## Patentansprüche

1. Verfahren zum Agglomerieren eines löslichen, pulverförmigen Materials, in dem man ein zentral fliessendes pulverförmiges Material durch zwei zu diesem Strom koaxialen Gasströmungen in einer stromabwärts verlaufenden Richtung befeuchtet, wobei zumindest die äussere Gasströmung Wasserdampf ist, dadurch gekennzeichnet, dass die innere Gasströmung schneller ist als die äussere, und die äussere Gasströmung eine Geschwindigkeit von 10 m/s und weniger beträgt, so dass eine Benetzung des Materials in einer langen Zone erfolgt.

2. Verfahren gemäss Anspruch 1, dadurch gekennzeichnet, dass die innere Gaströmung eine Luft- oder Wasserdampfströmung ist.

3. Verfahren gemäss Anspruch 1, dadurch gekennzeichnet, dass das Geschwindkigkeitsverhältnis der inneren zur äusseren Gasströmung zwischen 1:1 und 8:1 liegt.

4. Verfahren gemäss Ansprüche 1 bis 3 dadurch gekennzeichnet, dass die beiden Gasströmungen kreisförmig und über den ganzen Umfang des Stromes in ihrer Geschwindigkeit gleich sind.

5. Verfahren gemäss Ansprüche 1 bis 6, dadurch gekennzeichnet, dass die innere Gasströmung dünner ist als die äussere.

6. Verfahren gemäss Ansprüche 1 bis 5, dadurch gekennzeichnet, dass die innere Gasströmung gerade gerichtet oder mit Drall behaftet ist.

7. Verfahren gemäss Ansprüche 1 bis 6, dadurch gekennzeichnet, dass man mit gesättigtem oder überhitztem Wasserdampf arbeitet, wobei die Temperatur bei 100 bis 130° C und der Druck bei 1 bis 1,5 bar liegen.

8. Verfahren gemäss Ansprüche 1 bis 7, dadurch gekennzeichnet, dass man zentral zum pulverförmigen Materialstrom mit einer zusätzlichen Wasser- oder Wasserdampfströmung befeuchtet.

9. Verfahren gemäss Ansprüche 1 bis 8, dadurch gekennzeichnet, dass das teilchenförmige Material löslicher Kaffee oder ein Mischgetränk auf Kohlenhydratbasis ist.

10. Vorrichtung zum Behandeln eines löslichen, pulverförmigen Materials mit einem Füllrohr zur Speisung des Materials, wobei sie koaxial zum Füllrohr zwei Befeuchtungseinrichtungen aufweist, dadurch gekennzeichnet dass die innere Befeuchtungseinrichtung durch einen kreisförmigen Schlitz und die äussere durch eine ringförmige Sintermetallplatte gebildet ist und die Mündung des Füllrohres für das Material diejenige des Schlitzes für die Gasströmung und diejenige der Sintermetallplatte für die Zufuhr des Wasserdampfes praktisch in der gleichen Ebene liegen.

11. Vorrichtung gemäss Anspruch 10, dadurch gekennzeichnet, dass die Spaltöffnung des Schlitzes kleiner ist als die Breite der Sintermetallplatte.

12. Vorrichtung gemäss Ansprüche 10 oder 11, dadurch gekennzeichnet, dass die zwei Befeuchtungseinrichtungen ein oder zweikammerig sind.

13. Vorrichtung gemäss Ansprüchen 10 oder 11, dadurch gekennzeichnet, dass sie koaxial und in der Mitte des Füllrohres eine zusätzliche Befeuchtungseinrichtung aufweist.

14. Vorrichtung gemäss Ansprüche 10 bis 13, dadurch gekennzeichnet, dass über den Schlitz ein Ring mit Bohrungen und Leitflächen angebracht ist.

15. Vorrichtung gemäss Anspruch 14, dadurch gekennzeichnet, dass die Bohrungen und Leitflächen gerade oder schräg sind.

## Claims

1. A process for agglomerating a soluble, powder-form material, in which a centrally flowing powder-form material is wetted by two gas streams coaxial thereto in a downstream direction, at least the outer gas stream being steam, characterized in that the inner gas stream is faster than the outer gas stream and the outer gas stream has a velocity of 10 m/s or less so that the material is wetted in a long zone.

2. A process as claimed in claim 1, characterized in that the inner gas stream is air or steam.

3. A process as claimed in claim 1, characterized in that the velocity ratio of the inner gas stream to the outer gas stream is from 1:1 to 8:1.

4. A process as claimed in claims 1 to 3, characterized in that the two gas streams are circular and equal in velocity over the entire circumference of the stream.

5. A process as claimed in claims 1 to 4, characterized in that the inner gas stream is thinner than the outer gas stream.

6. A process as claimed in claims 1 to 5, characterized in that the inner gas stream is linear or rotates.

7. A process as claimed in claims 1 to 6, characterized in that saturated or superheated steam is used, the temperature being in the range from 100 to 130°C and the pressure in the range from 1 to 1.5 bar.

8. A process as claimed in claims 1 to 7, characterized in that the particulate material is wetted with an additional stream of water or steam centrally to the powder-form product stream.

9. A process as claimed in claims 1 to 8, characterized in that the particulate material is soluble coffee or a mixed beverage based on carbohydrates.

10. An apparatus for treating a soluble powder-form material, comprising a filling tube for feeding the material and two wetting nozzles coaxially of the filling tube, characterized in that the inner wetting nozzle is formed by a circular slot and the outer wetting nozzle is formed by an annular sintered metal plate and in that the opening of the filling tube for the material, the opening of the slot for the gas stream and the opening of the sintered metal plate for the supply of steam lie in substantially the same plane.

11. An apparatus as claimed in claim 10, characterized in that the split opening of the slot is smaller than the width of the sintered metal plate.

12. An apparatus as claimed in claims 10 and 11, characterized in that the two wetting nozzles comprise one or two compartments.

13. An apparatus as claimed in claims 10 or 11, characterized in that it comprises an additional wetting nozzle coaxially and in the middle of the filling tube.

14. An apparatus as claimed in claims 10 to 13, characterized in that a ring with bores and baffle surfaces is arranged over the slot.

15. An apparatus as claimed in claim 14, characterized in that the bores and baffle surfaces are straight or inclined.

## Revendications

1. Procédé d'agglomération d'une matière soluble, pulvérulente, dans lequel on humidifie une matière pulvérulente s'écoulant au centre par deux courants de gaz coaxiaux à ce courant, dans une direction dirigée vers l'aval, au moins le courant de gaz extérieur étant de la vapeur d'eau, caractérisé en ce que le courant de gaz intérieur est plus rapide que le courant de gaz extérieur et le courant de gaz extérieur présente une vitesse de 10 m/s et moins, de sorte qu'un mouillage de la matière s'effectue dans une zone longue.

2. Procédé selon la revendication 1, caractérisé en ce que le courant de gaz intérieur est un courant d'air ou de vapeur d'eau.

3. Procédé selon la revendication 1, caractérisé en ce que le rapport de vitesse du courant de gaz intérieur au courant de gaz extérieur est compris entre 1:1 et 8:1.

4. Procédé selon les revendications 1 à 3, caractérisé en ce que les deux courants de gaz sont circulaires et ont une vitesse identique sur toute la circonférence du courant.

5. Procédé selon les revendications 1 à 6, caractérisé en ce que le courant de gaz intérieur est plus mince que le courant de gaz extérieur.

6. Procédé selon les revendications 1 à 5, caractérisé en ce que le courant de gaz intérieur est rectiligne ou affecté d'une torsion.

7. Procédé selon les revendications 1 à 6, caractérisé en ce que l'on travaille avec de la vapeur d'eau saturée ou surchauffée, la température se situant entre 100 et 130 °C et la pression entre 1 et 1,5 bar.

8. Procédé selon les revendications 1 à 7, caractérisé en ce qu'on humidifie, au centre par rapport au courant de matière pulvérulente, avec un courant d'eau ou de vapeur d'eau supplémentaire.

9. Procédé selon les revendications 1 à 8, caractérisé en ce que la matière en forme de particules est du café soluble ou une boisson mixte à base d'hydrates de carbone.

10. Dispositif de traitement d'une matière soluble, pulvérulente, avec un tube de remplissage pour l'alimentation de la matière, dispositif comportant coaxialement au tube de remplissage deux dispositifs d'humidification, caractérisé en ce que le dispositif d'humidification intérieur est formé par une fente circulaire et le dispositif d'humidification extérieur, par une plaque de métal fritté annulaire, et la sortie du tube de remplissage pour la matière, celle de la fente pour le courant de gaz et celle de la plaque en métal fritté pour l'arrivée de vapeur d'eau se situent pratiquement dans le même plan.

11. Dispositif selon la revendication 10, caractérisé en ce que l'ouverture de la fente est inférieure à la largeur de la plaque en métal fritté.

12. Dispositif selon la revendication 10 ou 11, caractérisé en ce que les deux dispositifs d'humidification sont à une ou deux chambres.

13. Dispositif selon la revendication 10 ou 11, caractérisé en ce qu'il comporte un dispositif d'humidification supplémentaire, coaxialement et au centre du tube de remplissage.

14. Dispositif selon les revendications 10 à 13, caractérisé en ce qu'au-dessus de la fente est placé un anneau avec des perçages et des surfaces de guidage.

15. Dispositif selon la revendication 14, caractérisé en ce que les perçages et les surfaces de guidage sont droites ou obliques.
